# EUROPEAN PATENT SPECIFICATION

(11) **EP 3 361 722 B1**
(45) Date of publication and mention of the grant of the patent: **06.05.2020**
(21) Application number: 16853530.0
(22) Date of filing: 03.10.2016
(51) Int. Cl.: H04N 7/18, B60R 1/00

(54) **VIEWING DEVICE FOR VEHICLES AND VIEWING CONTROL PROGRAM FOR VEHICLES**
BEOBACHTUNGSVORRICHTUNG FÜR FAHRZEUGE UND BEOBACHTUNGSSTEUERUNGSPROGRAMM FÜR FAHRZEUGE
DISPOSITIF DE VISUALISATION POUR VÉHICULES ET PROGRAMME DE COMMANDE DE VISUALISATION POUR VÉHICULES

(30) Priority: 09.10.2015 JP 2015201221
(43) Date of publication of application: 15.08.2018
(73) Proprietor: Kabushiki Kaisha Tokai-Rika-Denki-Seisakusho, Niwa-gun, Aichi 480-0195 (JP)
(72) Inventor: ICHIKAWA, Tomonori, Niwa-gun Aichi 480-0195 (JP); NAKAI, Toshinari, Niwa-gun Aichi 480-0195 (JP)
(74) Representative: TBK
(86) International application number: PCT/JP2016/079293
(87) International publication number: WO 2017/061376

(56) References cited:
- WO-A1-2015/098156
- JP-A- 2005 328 181
- JP-A- 2015 136 056

## Description

### Technical Field

The present invention relates to a viewing device for a vehicle and a viewing control program for a vehicle by which the periphery of a vehicle is viewed due to the periphery of the vehicle being imaged and captured images being displayed.

### Background Art

The technique disclosed in Japanese Patent Application Laid-Open (JP-A) No. 2012-170127 for example is proposed as a viewing device for a vehicle that displays captured images of the periphery of a vehicle and by which the periphery of the vehicle is viewed.

In JP-ANo. 2012-170127, it is proposed that a rearward image is displayed at a size corresponding to the reflected image of a rearview mirror, on a central display region that is relatively wide and is positioned at the lateral direction center, and a right laterally rearward image and a left laterally rearward image are displayed, by being compressed more than the rearward image, on outer side display regions of the central display region.

### SUMMARY OF INVENTION

### Technical Problem

However, in JP-ANo. 2012-170127, an image of a size corresponding to the reflected image of the rearview mirror is displayed at the center, and compressed images are displayed at the both ends of the central display region, but this background art has not envisaged as far as changing the display position and changing the viewing range.

In JP-A No. 2012-170127, if an attempt is made to change the display position, it can be thought to either change the imaging range or move the position of the image that is cut out from the captured image. However, in a case of changing the imaging range, a structure for moving the camera that captures the images is needed. On the other hand, in a case of changing the position of cutting out from the captured image while keeping the compression rate constant, if the cut out position is moved until where the end portion of the captured image and the end portion of the image that is the object of compression abut one another, further changing of the display position is not possible, and therefore, there is room for improvement. Further prior art document JP 2015 136 056 A discloses a viewing device according to the preamble of claim 1.

The present invention was made in consideration of the above-described circumstances, and an object thereof is to enlarge the range of moving at the time of moving the display position of an image for viewing, whose position of being cut out from a captured image is changed and that includes a compressed image.

### Solution to Problem

In order to achieve the above-described object, a first aspect of the present disclosure has: a display portion that displays an image for viewing that combines a partial image, which is obtained by cutting out a portion of a captured image, and a compressed image, which is obtained by cutting out a peripheral image corresponding to a portion of a periphery of the partial image of the captured image and compressing a size more than the partial image; and a control section that, in a case of changing a viewing range of the image for viewing, changes respective positions of cutting out the partial image and the peripheral image from the captured image, and controls the display portion to display the image for viewing with at least one of a compression rate of the compressed image or a border position of the partial image and the compressed image within the image for viewing being changed in accordance with a changed size of the peripheral image, wherein in a case in which an end portion of a displayable image, which is of a predetermined range that can be displayed on the display portion, which is within the captured image, and which includes the partial image, abuts an end portion of the captured image when the displayable image is moved, the control section effects control so as to cut out the displayable image from the captured image and display the displayable image on the display portion.

In accordance with the first aspect of the present disclosure, the image for viewing that combines the partial image, which is obtained by cutting out a portion of the captured image, and the compressed image, which is obtained by cutting out a peripheral image corresponding to a portion of the periphery of the partial image of the captured image and whose size is compressed more than the partial image, is displayed on the display portion. Due thereto, the image for viewing that is a wide angle can be displayed, as compared with a case in which only the partial image that is cut out from the captured image is displayed.

Further, in a case of changing the viewing range of the image for viewing, at the control section, the respective positions of cutting out the partial image and the peripheral image from the captured image are changed, and the display portion is controlled so as to display the image for viewing with at least one of the compression rate of the compressed image and the border position of the partial image and the compressed image within the image for viewing being changed in accordance with the changed size of the peripheral image. Due thereto, the image for viewing can be displayed even if the cut out position of the captured image is changed so as to go past the position where the end portion of the captured image and the end portion of the image that is the object of compression abut one another. Accordingly, the range of moving at the time of moving the display position of the image for viewing, whose position of being cut out from the captured image is changed and that includes the compressed image, can be enlarged.

Note that, as in a second aspect of the present disclosure, in a case in which an end portion of a displayable image, which is of a predetermined range that can be displayed on the display portion, which is within the captured image and which includes the partial image, abuts an end portion of the captured image, the control section effects control so as to cut out the displayable image from the captured image and display the displayable image on the display portion. Due thereto, the range of moving of the image for viewing can be enlarged past where the end portion of the captured image and the end portion of the image that is the object of compression abut one another, and until where the end portion of the displayable image and the end portion of the captured image abut one another.

Further, as in a third aspect of the present disclosure, the control section may further effect control so as to display a borderline of the partial image and the compressed image. Due thereto, a vehicle occupant can be notified of the border between the partial image that is not compressed and the compressed image.

Further, as in a fourth aspect of the present disclosure, in a case of changing the compression rate, the control section may further causes display of an image showing that the compression rate is being changed. Due thereto, a vehicle occupant can recognize that the compression rate of the compressed image that is within the image for viewing is being changed.

Note that the present invention may be a viewing control program for a vehicle that causes a computer to function as the control section of the viewing device for a vehicle of any one of the first through fourth aspects of the present disclosure.

### Advantageous Effects of Invention

As described above, in accordance with the present invention, there is the effect that the range of moving at the time of moving the display position of an image, whose position of being cut out from a captured image is changed and that includes a compressed image, can be enlarged.

### BRIEF DESCRIPTION OF DRAWINGS

Fig. 1A is a drawing showing an example of the installation position in a vehicle of a viewing device for a vehicle relating to an embodiment of the present invention.
Fig. 1B is a drawing showing the schematic structure of the viewing device for a vehicle of the viewing device for a vehicle relating to the embodiment of the present invention.
Fig. 2 is a block drawing showing the structure of a control system of the viewing device for a vehicle relating to the present embodiment.
Fig. 3 is a drawing for explaining generating of an image for viewing from a captured image.
Fig. 4 is a drawing showing an example in which regions of a partial image and a peripheral image, that are cut out from a captured image, are respectively moved toward the vehicle outer side.
Fig. 5 is a drawing showing an example in which the regions of the cut out partial image and peripheral image are respectively moved toward the vehicle outer side until an end portion of the peripheral image and an end portion of the captured image abut one another.
Fig. 6 is a drawing showing an example in which a range of moving of the image for viewing is enlarged by generating a compressed image by making a compression rate lower than an original compression rate, in accordance with a size of the peripheral image.
Fig. 7 is a drawing showing an example of generating and displaying a displayable image as is as the image for viewing.
Fig. 8 is a flowchart showing an example of the flow of processings that are carried out at a control device of the viewing device for a vehicle relating to the present embodiment.
Fig. 9A is a drawing showing an example of giving notice that the compression rate is being changed, by changing the thickness of a borderline.
Fig. 9B is a drawing showing an example of displaying the compression rate on a monitor.
Fig. 10A is a drawing for explaining an example of generating a compressed image, while maintaining the compression rate, by moving the borderline and making the compressed image small, and is a drawing showing a state before moving.
Fig. 10B is a drawing for explaining an example of generating the compressed image, while maintaining the compression rate, by moving the borderline and making the compressed image small, and is a drawing showing a state in which the end portion of the peripheral image and the end portion of the captured image abut one another.
Fig. 10C is a drawing for explaining an example of generating the compressed image, while maintaining the compression rate, by moving the borderline and making the compressed image small, and is a drawing showing a state in which the borderline has been moved.

### DESCRIPTION OF EMBODIMENTS

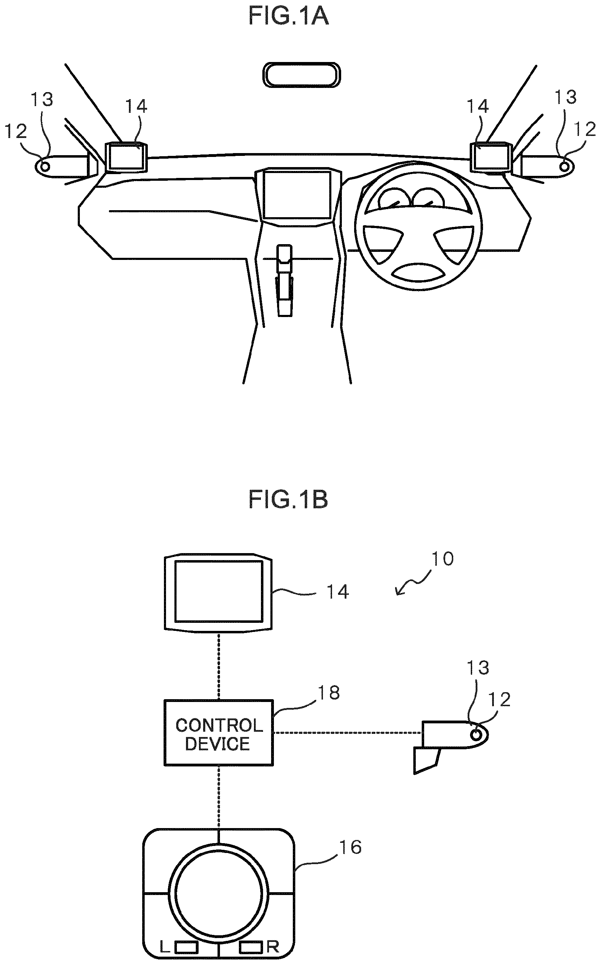

An example of an embodiment of the present invention is described in detail hereinafter with reference to the drawings. Fig. 1A is a drawing showing an example of the installed position in a vehicle of a viewing device for a vehicle relating to the embodiment of the present invention. Fig. 1B is a drawing showing the schematic structure of the viewing device for a vehicle.

In the viewing device for a vehicle relating to the present embodiment, laterally rear side cameras 12, monitors 14 that serve as display portions, an operation portion 16 and a control device 18 that serves as a control section are respectively provided so as to correspond to the left and right of the vehicle.

The laterally rear side camera 12 is set at the outer side of the vehicle front side end of the vertical direction intermediate portion of a side door (a front side door, not illustrated) of the vehicle, and captures images of the vehicle laterally rear side. The laterally rear side camera 12 is provided at a housing 13 which is substantially shaped as a rectangular parallelepiped box and serves as a supporting body. A lens is disposed so as to be directed toward the vehicle laterally rear side, and the laterally rear side camera 12 captures images of the laterally rear side of the vehicle. The vehicle transverse direction inner side end portion of the housing 13 is mounted to the side door, and the housing 13 is supported so as to be able to pivot in the vehicle longitudinal direction at the side door (the vehicle body side).

The monitor 14 is provided in a vicinity of the lower end of a front pillar, and mainly displays captured images of the laterally rear side camera 12. Namely, the monitor 14 is used in place of an outer mirror, and the vehicle laterally rear side can be viewed by the monitor 14 being checked.

The operation portion 16 carries out an instruction to change the display positions of the images that are displayed on the monitors 14, i.e., the ranges of viewing the laterally rear sides, and the like. For example, the operation portion 16 has a switch for carrying out an instruction to change the viewing range in the vehicle transverse direction, an instruction to change the viewing range in the vehicle vertical direction and the like, and has sensors and the like.

The control device 18 is provided so as to correspond to the left and right respectively, and carries out display control of the captured images of the respective left and right laterally rear side cameras 12. Note that the control device 18 may further carry out reversing-linked control that, at the time of reversing, changes the viewing ranges of the vehicle laterally rear sides and makes it easy to see obstacles that are at the lower sides of the vehicle lateral sides, or turning-linked control that, linked with the operation of a turn signal, changes the viewing range and makes it easy to view the vehicle laterally rear side, or the like.

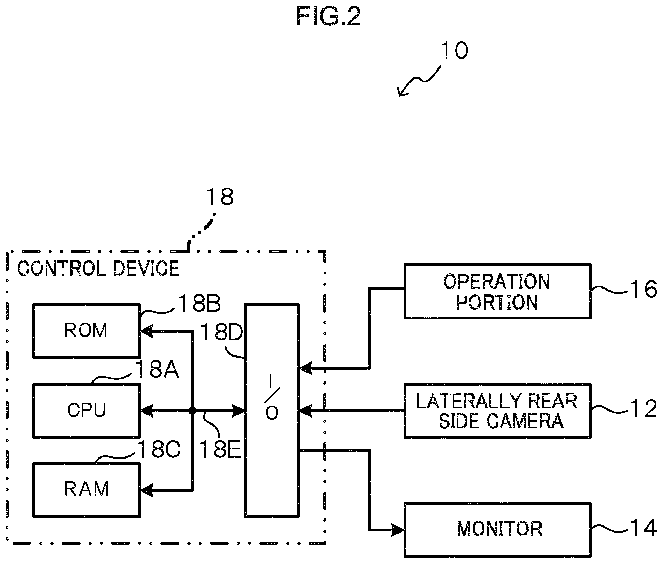

The structure of the control system of a viewing device 10 for a vehicle relating to the present embodiment is described next. Fig. 2 is a block drawing showing the structure of the control system of the viewing device 10 for a vehicle relating to the present embodiment.

The control device 18 is structured by a microcomputer in which a CPU 18A, a ROM 18B, a RAM 18C and an I/O (input/output interface) 18D are respectively connected to a bus 18E.

Various types of programs such as a viewing control program for a vehicle that is for carrying out display control for displaying the laterally rear side captured images of the laterally rear side cameras 12 on the monitors 16, and the like, are stored in the ROM 18B. Display control onto the monitors 16 is carried out due to programs that are stored in the ROM 18B being expanded in the RAM 18C and being executed by the CPU 18A.

The operation portion 16 that is for instructing changing of the viewing ranges and the like, the laterally rear side cameras 12, and the monitors 14 are connected to the I/O 18D.

When an instruction to change the viewing range at a laterally rear side, or the like, is given by a vehicle occupant, the operation portion 16 outputs a change instruction signal to the control device 18.

The laterally rear side cameras 12 obtain laterally rear side captured images by imaging the vehicle laterally rear sides. The laterally rear side captured images that are obtained by the imaging are outputted to the control device 18 as results of imaging of the laterally rear side cameras 12.

At the time of usual traveling, the monitors 16 display, in accordance with control of the control device 18, the laterally rear side captured images that have been imaged by the laterally rear side cameras 12.

Further, on the basis of the results of imaging of the laterally rear side cameras 12, the control device 18 carries out display control onto the monitors 16, and, in a case in which changing of the viewing range at a laterally rear side is instructed by the operation portion 16 and the control device 18 receives a change instruction signal, the control device 18 carries out control to change the display position of the monitor 16 (the viewing range of the laterally rear side).

Note that display control of the left and right monitors 14 may be carried out by the one control device 18, or the control devices 18 may be provided as a pair in correspondence with the left and right of the vehicle. In a case in which a pair of the control devices 18 is provided in correspondence with the left and the right, the I/O 18D of each of the control devices 18 may be connected to the other of the control devices 18, so that the control devices 18 can communicate with one another respectively.

Here, the method of displaying a captured image of the laterally rear side camera 12 onto the monitor 14 by the control device 18 is described in detail.

At the viewing device 10 for a vehicle relating to the present embodiment, images that are portions are cut out from the captured image that has been captured by the laterally rear side camera 12, and are displayed on the monitor 14. At this time, in the present embodiment, there is generated an image for viewing that combines a partial image, which is obtained by cutting out a portion of the captured image, and a compressed image, which is obtained by cutting out, from the captured image, a peripheral image that corresponds to a portion of the periphery of the cut out partial image and by compressing the size more than the partial image, and the image for viewing is displayed on the monitor 14. Further, at the time of displaying the image for viewing on the monitor 14, because the captured image is an image in which the left and right are reversed, an image for viewing that has been subjected to mirror-image conversion that reverses the left and the right is displayed. Note that, in the present embodiment, the position of the borderline of the partial image and the compressed image that are displayed on the monitor 14 is a constant position.

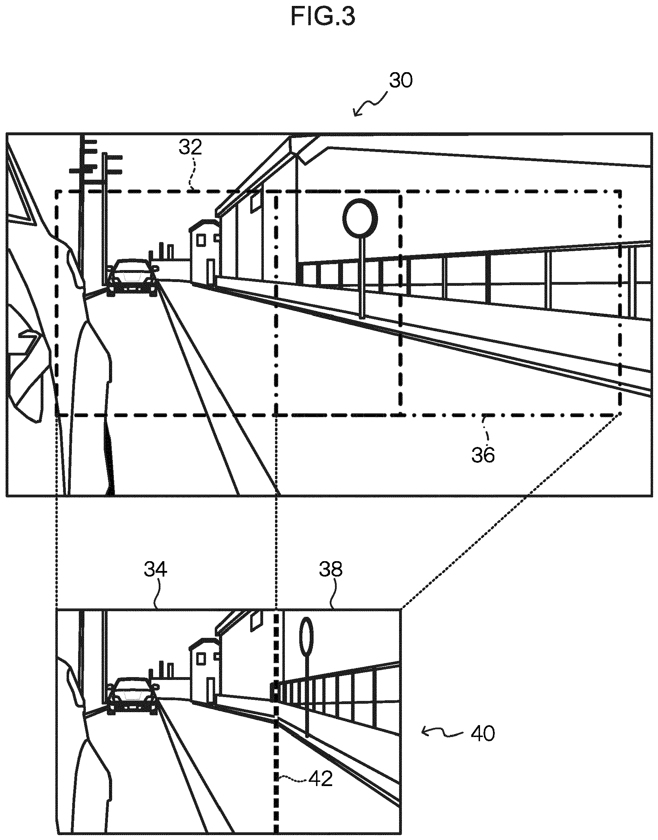

Concretely, in a case of generating an image 40 for viewing from a captured image 30 shown in Fig. 3, the dotted line in Fig. 3 is made to be a displayable image 32 of a range that can be displayed on the monitor 14, and a partial image 34 of a predetermined range of this displayable image 32 is cut out therefrom. Further, a peripheral image 36, which is a predetermined range and is shown by the one-dot chain line and corresponds to the region at the vehicle outer side of the partial image 34, is cut out, and is compressed at a predetermined compression rate, and a compressed image 38 is generated. Then, the image 40 for viewing, in which the partial image 34 and the compressed image 38 are combined and that has been subjected to mirror-image conversion, is generated and is displayed on the monitor 14. Namely, by displaying the compressed image 38, the region at the outer side of the vehicle can be displayed at a wider angle than by displaying the displayable image 32, which is the dotted-line region in Fig. 3, as is on the monitor 14.

Further, by displaying a borderline 42 between the partial image 34 and the compressed image 38 that are within the image 40 for viewing, the vehicle occupant can be informed of the border between the partial image 34 that has not been compressed and the compressed image 38.

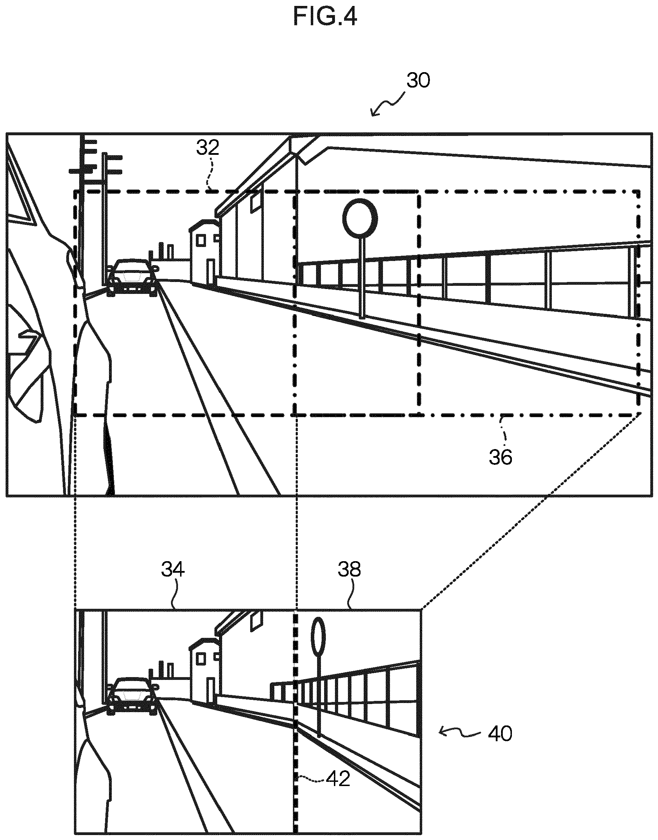

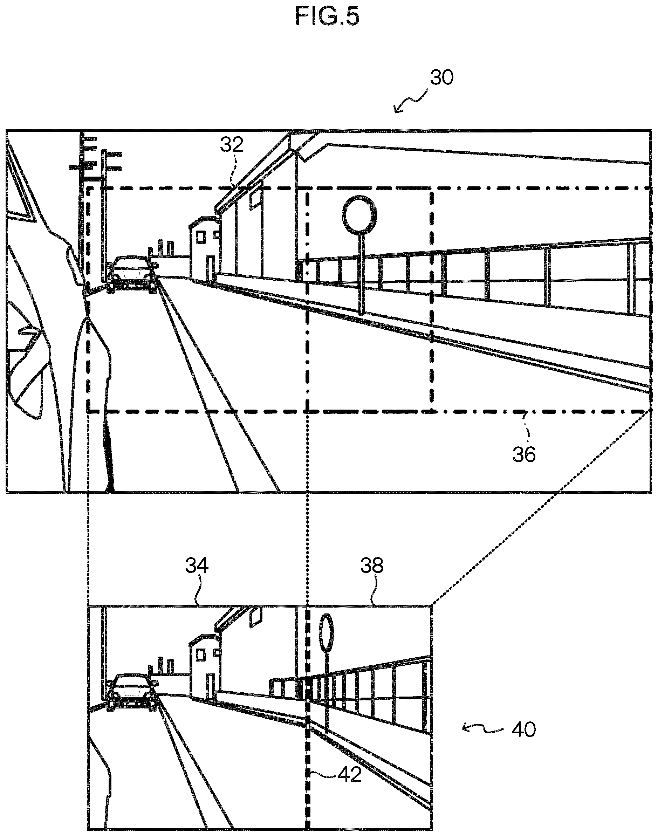

By the way, in a case in which the viewing range of this image 40 for viewing is to be changed, as shown in Fig. 4, it suffices to respectively move the regions of the partial image 34 and the peripheral image 36 that are cut out from the captured image (in Fig. 4, move these images toward the vehicle outer side, which is toward the right in the drawing, with respect to Fig. 3), and to display these image. However, although the image 40 for viewing can be generated until where the end portion of the peripheral image 36 and the end portion of the captured image 30 abut one another as shown in Fig. 5, in a case in which the images are moved further than that toward the vehicle outer side, the compressed image 38 cannot be generated while the compression rate is maintained. Therefore, the range of moving of the image for viewing is limited to until where the end portion of the peripheral image 36 and the end portion of the captured image 30 abut one another.

Thus, in the present embodiment, by generating the image 40 for viewing by changing the compression rate of the compressed image in accordance with the size of the peripheral image 36 that is cut out from the captured image 30, the range of moving of the image 40 for viewing can be enlarged.

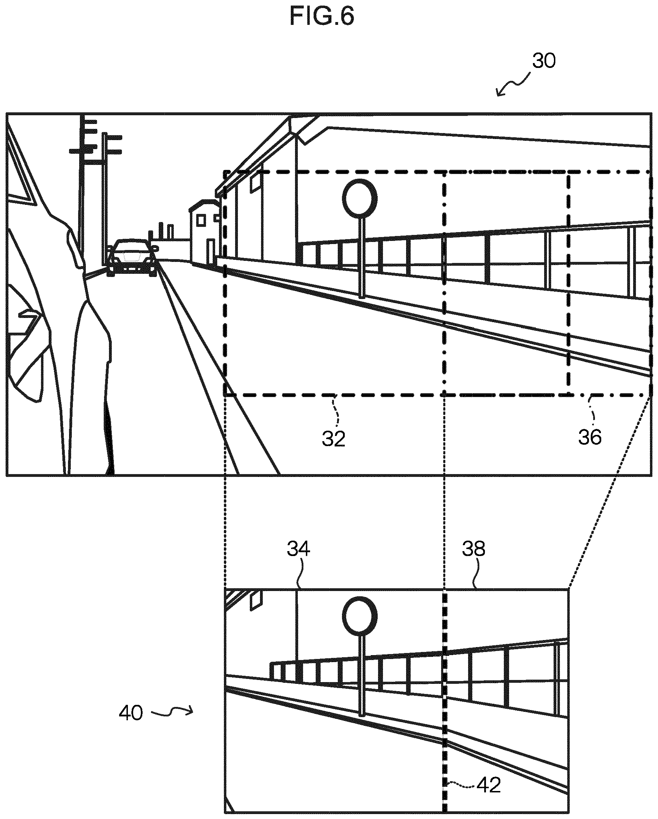

Namely, as shown in Fig. 6, when the ranges of cutting out the images are moved, and the end portion of the captured image 30 and the end portion of the peripheral image 36 abut one another, and the ranges of cutting out are moved further toward the vehicle outer side, the size of the peripheral image 36 that is cut out from the captured image 30 becomes smaller. In this case, the range of moving the image 40 for viewing can be enlarged by generating the compressed image 38 by making the compression rate lower than the original compression rate in accordance with the size of the peripheral image 36.

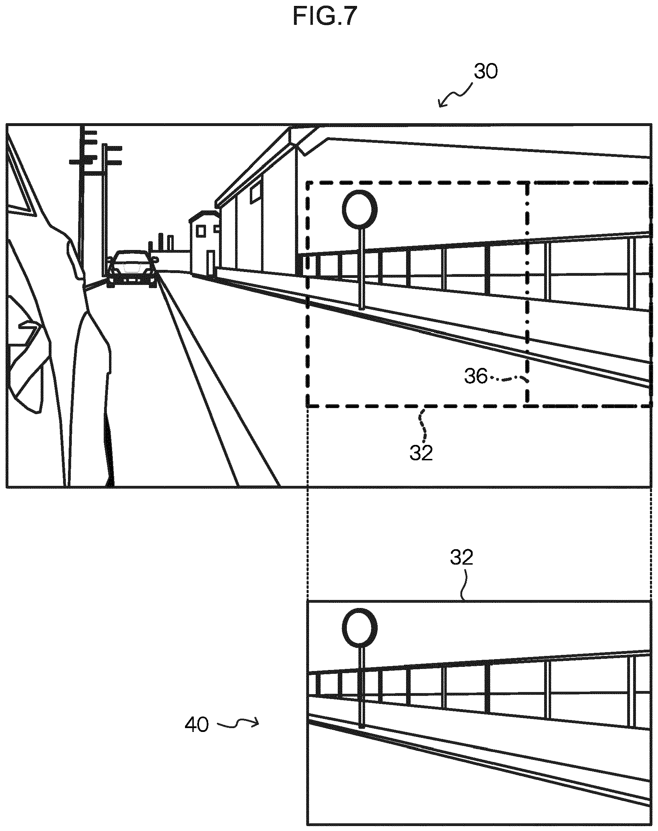

Further, in a case in which the ranges of cutting out are moved further toward the vehicle outer side, and the end portion of the captured image 30 and the end portion of the displayable image 32 that includes the partial image 34 abut one another, as shown in Fig. 7, the displayable image 32 that has been mirror-image converted is, as is, generated as the image 40 for viewing and displayed on the monitor 14. Due thereto, the range of moving of the image 40 for viewing can be enlarged further. Namely, in the present embodiment, the range of moving of the image 40 for viewing can be made to be from the state in which one end portion of the displayable image 32 abuts one end portion of the captured image 30, until the other end portion of the displayable image 32 abuts the other end portion of the captured image 30.

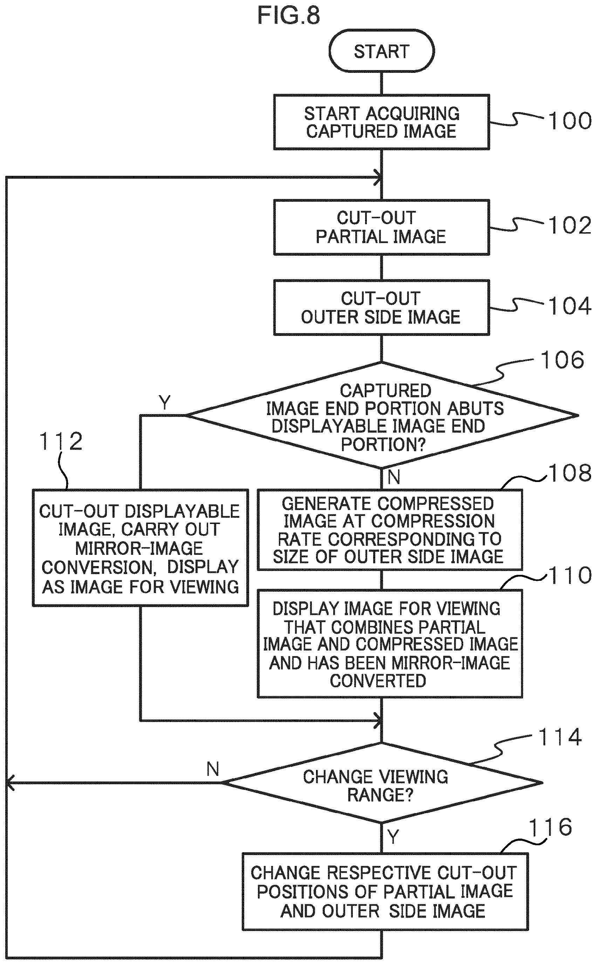

Concrete processings that are carried out at the control device 18 of the viewing device 10 for a vehicle, which relates to the present embodiment and is structured as described above, are described next. Fig. 8 is a flowchart showing an example of the flow of processings that are carried out at the control device 18 of the viewing device 10 for a vehicle relating to the present embodiment. Note that the processings of Fig. 8 are described as starting when an unillustrated ignition switch is turned on, and ending when the unillustrated ignition switch is turned off. Further, the processings of Fig. 8 are carried out by the CPU 18A expanding, in the RAM 18C, and executing the viewing control program for a vehicle that is stored in the ROM 18B.

First, in step 100, the CPU 18A starts acquiring the captured image that has been captured by the laterally rear side camera 12, and the routine moves on to step 102. Namely, the results of imaging of the laterally rear side camera 12 are successively acquired.

In step 102, the CPU 18A cuts-out the partial image 34 from the captured image 30, and the routine moves on to step 104.

In step 104, the CPU 18A cuts-out the peripheral image 36, which is the region at the vehicle outer side of the partial image 34, from the captured image 30, and the routine moves on to step 106.

In step 106, the CPU 18A judges whether or not an end portion of the captured image 30 abuts an end portion of the displayable image 32. Namely, the CPU 18A judges whether or not the end portion of the displayable image 32 that is shown by the dotted line abuts the vehicle outer side end portion of the captured image 30 as shown in Fig. 7. If this judgment is negative, the routine moves on to step 108, and, if this judgment is affirmative, the routine moves on to step 112.

In step 108, the CPU 18A compresses the peripheral image 36 at a compression rate that corresponds to the size of the peripheral image, and generates the compressed image 38, and the routine moves on to step 110. Namely, the compressed image 38 is generated at a constant compression rate until the end portion of the peripheral image 36 and the end portion of the captured image 30 abut one another, and as the viewing range is moved further than that toward the vehicle outer side and the peripheral image 36 becomes smaller, the compression rate is lowered and the compressed image 38 is generated.

In step 110, the CPU 18A generates the image 40 for viewing, in which the partial image 34 and the compressed image 38 are combined and that has been subjected to mirror-image conversion, and displays the image 40 for viewing on the monitor 14, and the routine moves on to step 114.

On the other hand, in step 112, the CPU 18A cuts-out the displayable image 32 from the captured image 30 and subjects the displayable image 32 to mirror-image conversion, and, as shown in Fig. 7, displays the displayable image 32 on the monitor 14 as the image 40 for viewing, and the routine moves on to step 114.

In step 114, the CPU 18A judges whether or not changing of the viewing range has been instructed. Namely, the CPU 18A judges whether or not a vehicle occupant has operated the operation portion 16 and an instruction to change the viewing range has been given. If this judgment is affirmative, the routine moves on to step 116, and, if this judgment is negative, the routine returns to step 102, and the above-described processings are repeated.

In step 116, the CPU 18A changes the respective positions of cutting out of the partial image 34 and the peripheral image 36 in accordance with the direction of operation of the operation portion 16, and the routine returns to step 102, and the above-described processings are repeated.

Due to control by the control device 18 being carried out in this way, the viewing range that can be seen from the image for viewing of the monitor 14 can be changed. Further, by generating the compressed image 38 by changing the compression rate in accordance with the size of the peripheral image 36 that is cut out from the captured image, the range of moving of the image 40 for viewing can be enlarged as compared with a case in which the image for viewing is generated by using a compressed image of a constant compression rate.

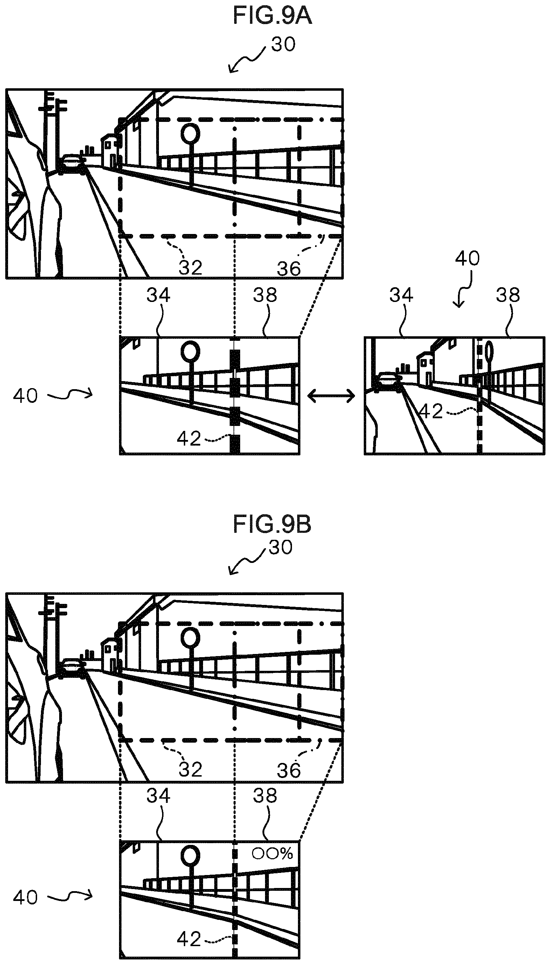

Note that, in the above-described embodiment, in a case in which the viewing range is to be changed, there is a constant compression rate until the end portion of the peripheral image 36 abuts the end portion of the captured image 30, and, in a case in which the viewing range is moved further than that toward the vehicle outer side, the compression rate is changed. Therefore, an image that shows that the compression rate is changing may be further displayed. For example, as shown in Fig. 9A, notification may be given that the compression rate is being changed, by changing the thickness of the borderline 42. For example, Fig. 9A illustrates an example in which the borderline 42 when the compression rate is low is thick, and the borderline 42 when the compression rate is high is thin. Or, notification that the compression rate is being changed may be given by changing the color of the borderline 42. Or, as shown in Fig. 9B, the compression rate may be displayed as a numerical value on the monitor 14.

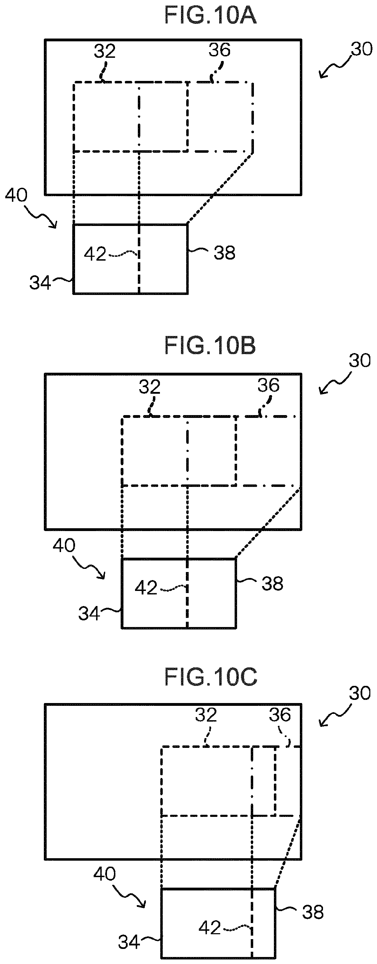

Further, in the above-described embodiment, the range of moving of the image 40 for viewing is enlarged by changing the compression rate of the compressed image 38 in accordance with the size of the peripheral image 36. However, instead of changing the compression rate, the size of the compressed image 38 may be changed by moving the position of the borderline 42 while keeping the compression rate constant. Namely, as shown in Fig. 10A and Fig. 10B, until the end portion of the peripheral image 36 and the end portion of the captured image 30 abut one another, in the same way as in the above-described embodiment, the partial image 34 and the compressed image 38 of a constant compression rate are combined, and the image for viewing is generated and displayed. Further, in a case in which the end portion of the peripheral image 36 and the end portion of the captured image 30 abut one another, and the viewing range is moved further toward the vehicle outer side, as shown in Fig. 10C, by moving the borderline 42 and making the size of the compressed image 38 small, the compressed image 38 may be generated while the compression rate is maintained. Or, both the compression rate and the borderline 42 may be changed in accordance with the size of the peripheral image 36.

Further, although the above embodiment describes an example in which the partial image 34 and the compressed image 38 are arrayed in the vehicle transverse direction, the present invention is not limited to this, and these images may be arrayed in the vehicle vertical direction.

Further, although the above embodiment describes an example in which the viewing range is changed by a vehicle occupant operating the operation portion 16, the above-described display method may be applied in a case in which the viewing range is changed while linked with turning or reversing. Namely, in steps 114 and 116, it may be judged whether or not position changing, which corresponds to linking with turning or linking with reversing, is to be carried out, and the positions of cutting out may be changed to positions of cutting out that are linked with turning or reversing.

Further, it is described that the processings carried out at the control device 18 in the above embodiment are software processings, but the present invention is not limited to this. For example, the processings may be processings that are carried out by hardware, or may be processings that combine both hardware and software.

Further, the processings that are carried out at the control device 18 in the above-described embodiment may be stored as a program on a storage medium and distributed.

## Claims

1. A viewing device for a vehicle, comprising:
a display portion (14) that displays an image (40) for viewing that combines a partial image (34), which is obtained by cutting out a portion of a captured image (30), and a compressed image (38), which is obtained by cutting out a peripheral image (36), corresponding to a portion of a periphery of the partial image of the captured image and compressing a size more than the partial image; and
a control section (18) that, in a case of changing a viewing range of the image for viewing, changes respective positions of cutting out the partial image and the peripheral image from the captured image, and controls the display portion to display the image for viewing with at least one of a compression rate of the compressed image or a border position of the partial image and the compressed image within the image for viewing being changed in accordance with a changed size of the peripheral image,
**characterized in that**,
in a case in which an end portion of a displayable image (40), which is of a predetermined range that can be displayed on the display portion, which is within the captured image (30), and which includes the partial image (34), abuts an end portion of the captured image (30) when the displayable image (40) is moved, the control section (18) effects control so as to cut out the displayable image (40), from the captured image (30) and display the displayable image (40) on the display portion (14).

2. The viewing device for a vehicle of Claim 1, wherein the control section (18) further effects control so as to display a borderline (42) of the partial image (34) and the compressed image (38).

3. The viewing device for a vehicle of Claim 1 or 2, wherein, in a case of changing the compression rate, the control section (18) further causes display of an image showing that the compression rate is being changed.

## Patentansprüche

1. Betrachtungsvorrichtung für ein Fahrzeug mit:
einem Anzeigeteil (14), der ein zu betrachtendes Bild (40) anzeigt, das ein partielles Bild (34) und ein komprimiertes Bild (38) kombiniert, wobei das partielle Bild (34) durch Ausschneiden eines Teils eines aufgenommenen Bildes (30) erhalten wird, und das komprimierte Bild (38) durch Ausschneiden eines Randbereichsbildes (36), das einem Randbereich des partiellen Bildes des aufgenommenen Bildes entspricht, und durch Komprimieren einer Größe, die größer als das partielle Bild ist, erhalten wird; und
einem Steuerungsabschnitt (18), der bei einer Änderung eines Betrachtungswinkels des zu betrachtenden Bildes die jeweilige Position des Ausschnitts des partiellen Bildes und des Randbereichsbildes aus dem aufgenommenen Bild ändert, und den Anzeigeteil für die Anzeige des zu betrachtenden Bildes durch mindestens eine Kompressionsrate des komprimierten Bildes oder eine Grenzposition des partiellen Bildes steuert, wobei das komprimierte Bild innerhalb des zu betrachtenden Bildes entsprechend einer veränderten Größe des Randbereichsbildes verändert wird,
**dadurch gekennzeichnet, dass**
bei einem Fall, bei dem bei Bewegung eines anzeigbaren Bildes (40) ein Endteil des anzeigbaren Bildes (40), der einen vorbestimmten, auf dem Anzeigeteil angezeigbaren Bereich aufweist, der sich innerhalb des aufgenommenen Bildes (30) befindet, und der das partielle Bild (34) enthält, an ein Endteil des aufgenommenen Bildes (30) angrenzt, der Steuerabschnitt (18) die Steuerung bewirkt, um das anzeigbare Bild (40) aus dem aufgenommenen Bild (30) auszuschneiden und auf dem Anzeigeteil (14) anzuzeigen.

2. Betrachtungsvorrichtung für ein Fahrzeug nach Anspruch 1, wobei der Steuerungsabschnitt (18) ferner eine Steuerung derart bewirkt, dass eine Grenzlinie (42) des partiellen Bildes (34) und des komprimierten Bildes (38) angezeigt wird.

3. Betrachtungsvorrichtung für ein Fahrzeug nach Anspruch 1 oder 2, wobei im Falle einer Änderung der Kompressionsrate der Steuerabschnitt (18) ferner die Anzeige eines Bildes bewirkt, das zeigt, dass die Kompressionsrate geändert wird.

## Revendications

1. Dispositif de visualisation pour un véhicule, comprenant :
une partie d'affichage (14) qui affiche une image (40) pour la visualisation qui combine une image partielle (34), qui est obtenue par la découpe d'une partie d'une image capturée (30), et une image compressée (38), qui est obtenue par la découpe d'une image périphérique (36), correspondant à une partie d'une périphérie de l'image partielle de l'image capturée et compressant une taille supérieure à l'image partielle ; et
une section de commande (18) qui, dans le cas d'une modification d'une plage de visualisation de l'image pour la visualisation, modifie des positions respectives de découpe de l'image partielle et de l'image périphérique à partir de l'image capturée, et commande la partie d'affichage pour afficher l'image pour la visualisation avec au moins l'un d'un taux de compression de l'image compressée ou d'une position de bordure de l'image partielle et de l'image compressée à l'intérieur de l'image pour la visualisation en cours de modification conformément à une taille modifiée de l'image périphérique,
**caractérisé en ce que**,
dans un cas dans lequel une partie d'extrémité d'une image apte à être affichée (40), qui appartient à une plage prédéterminée qui peut être affichée sur la partie d'affichage, qui est à l'intérieur de l'image capturée (30), et qui inclut l'image partielle (34), est en butée contre une partie d'extrémité de l'image capturée (30) lorsque l'image apte à être affichée (40) est déplacée, la section de commande (18) effectue une commande afin de découper l'image apte à être affichée (40) à partir de l'image capturée (30) et d'afficher l'image apte à être affichée (40) sur la partie d'affichage (14).

2. Dispositif de visualisation pour un véhicule selon la revendication 1, dans lequel la section de commande (18) effectue en outre une commande afin d'afficher une limite (42) de l'image partielle (34) et de l'image compressée (38).

3. Dispositif de visualisation pour un véhicule selon la revendication 1 ou 2, dans lequel, dans le cas d'une modification du taux de compression, la section de commande (18) entraîne en outre l'affichage d'une image montrant que le taux de compression est en cours de modification.
